(19) Europäisches Patentamt

European Patent Office

Office européen des brevets

(11) Numéro de publication : **0 507 640 A1**

(12) **DEMANDE DE BREVET EUROPEEN**

(21) Numéro de dépôt : **92400216.5**

(22) Date de dépôt : **28.01.92**

(51) Int. Cl.⁵ : **A01D 46/26**

(30) Priorité : **03.04.91 FR 9104049**

(43) Date de publication de la demande :
**07.10.92 Bulletin 92/41**

(84) Etats contractants désignés :
**DE ES FR GR IT PT**

(71) Demandeur : **Duffaut, Alain**
**F-47120 Duras (FR)**

(72) Inventeur : **Di Palma, Roland**
**" Barnage "**
**F-47120 Duras (FR)**

(74) Mandataire : **Armengaud, Alain et al**
**Cabinet ARMENGAUD AINE 3, Avenue**
**Bugeaud**
**F-75116 Paris (FR)**

(54) **Machine automatique pour récolter les fruits.**

(57)    Machine automatique destinée à assurer la récolte de fruits à partir d'arbres fruitiers, caractérisée en ce qu'elle comporte montés sur un tracteur en déplacement continu :

— un élément de préhension (10), en forme de pince et positionné latéralement audit tracteur (T1), qui est monté sensiblement horizontalement sur un support (102) suspendu à un ensemble de bras télescopiques (14, 14'), pouvant être déplacé selon un mouvement angulaire par rapport à la trajectoire du tracteur, ledit élément de préhension comprenant un bras fixe (20) supporté à l'extrémité dudit bras télescopique et un bras mobile (22) articulé sur ledit bras fixe et déplacé par un vérin (26), lesdits bras fixe et mobile étant conçus de façon à enserrer le tronc (12) dudit arbre et ils sont pourvus de moyens de protection (27-28-30) afin de ne pas endommager le tronc de l'arbre qu'ils enserrent, tout cet ensemble étant supporté latéralement audit tracteur par un équipage mobile tel que des roues (100) ou des chenilles (101) éventuellement moteur.

— un système vibrant (50) monté sur ledit élément de préhension (10) pour entraîner ledit arbre en vibration afin d'en faire tomber les fruits après préhension de son tronc par ledit élément de préhension ;

— au moins un tapis de réception (58) des fruits tombant de l'arbre porté par un cadre (60) monté sur des bras télescopiques (62) et muni de moyens de support, ledit tapis vient se positionner sous ledit arbre pour recueillir les fruits.

FIG. 6

La présente invention est relative à une machine automatique destinée à assurer la récolte et le ramassage de fruits à partir d'arbres fruitiers, notamment de prunes. Cette machine est conçue de façon à être montée sur un tracteur afin de ramasser les fruits alors que le tracteur avance de façon continue.

Cette invention concerne donc une machine automatique destinée à assurer la récolte de fruits à partir d'arbres fruitiers caractérisée en ce qu'elle comporte montés sur un tracteur :

– un élément de préhension, en forme de pince et positionné latéralement audit tracteur, qui est monté sensiblement horizontalement sur un support suspendu à un ensemble de bras télescopiques, pouvant être déplacé selon un mouvement angulaire par rapport à la trajectoire du tracteur, ledit élément de préhension comprenant un bras fixe supporté à l'extrémité dudit bras télescopique et un bras mobile articulé sur ledit bras fixe et déplacé par un vérin, lesdits bras fixe et mobile étant conçus de façon à enserrer le tronc dudit arbre et ils sont pourvus de moyens de protection afin de ne pas endommager le tronc de l'arbre qu'ils enserrent, tout cet ensemble étant supporté latéralement audit tracteur par un équipage mobile tel que des roues ou des chenilles éventuellement moteur.

– un système vibrant monté sur ledit élément de préhension pour entraîner ledit arbre en vibration afin d'en faire tomber les fruits après préhension de son tronc par ledit élément de préhension ;

– au moins un tapis de réception des fruits tombant de l'arbre porté par un cadre monté sur des bras télescopiques et muni de moyens de support, ledit tapis vient se positionner sous ledit arbre pour recueillir les fruits .

Selon la présente invention le tracteur portant la machine automatique pour faire tomber et recueillir les fruits est associée à un second tracteur se déplaçant selon une trajectoire parallèle à sa trajectoire, de l'autre côté de la rangée d'arbres, ce second tracteur étant muni d'un tapis de réception et de tapis transporteurs similaires à ceux du premier tracteur.

Selon une autre caractéristique de la présente invention le bras télescopique portant l'élément préhenseur en forme de pince est déplacé d'un mouvement angulaire par l'intermédiaire d'un vérin de balayage et il comporte un système de frein de blocage qui se libère automatiquement lors du serrage de la pince sur le tronc de l'arbre.

Selon une autre caractéristique de la présente invention on prévoit un tapis transporteur horizontal à double sens de déplacement disposé sur le bord inférieur du tapis de réception et deux tapis transporteurs latéraux inclinés sur l'horizontale remontant les fruits récoltés sur les tapis de réception et transportés par le tapis horizontal, vers les palettes de réception prévues sur chacun desdits tracteurs.

L'invention prévoit en outre sur chaque tracteur un dispositif d'étanchéité montée sur l'un des bords latéraux du tapis transporteur horizontal, ces dispositifs venant se rabattre contre le tronc de l'arbre enserré par ledit élément de préhension en forme de pince pour assurer la continuité de la surface de réception des fruits entre les tracteurs.

D'autres caractéristiques et avantages de la présente invention ressortiront de la description faite ci-après en référence aux dessins annexés qui en illustrent un exemple de réalisation dépourvu de tout caractère limitatif. Sur les dessins :

– la figure 1 est une vue schématique en élévation frontale représentant la machine de récolte selon la présente invention montée sur son tracteur et en position de fonctionnement ;

– la figure 2 est une vue similaire à la figure 1 mais à échelle plus réduite montrant la machine de récolte montée sur son tracteur associée à un second tracteur portant un tapis de réception des fruits similaire à celui prévu sur le premier tracteur ;

– la figure 3 est une vue schématique en plan de la figure 1 illustrant le fonctionnement de l'élément de préhension en forme de pince de la machine selon l'invention, cet élément étant représenté dans la position dans laquelle il enserre le tronc d'un arbre fruitier ;

– la figure 4 est une vue partielle schématique et en plan représentant l'élément de préhension dans sa position ouverte ;

– la figure 5 est une vue en plan représentant l'un des tracteurs de la machine selon l'invention avec son tapis de réception des fruits récoltés et son dispositif d'étanchéité ;

– la figure 6 est une vue de dessus de la machine selon l'invention munie des autres moyens de réalisation de l'élément de préhension et du dispositif d'étanchéité entre l'arbre et le tracteur ;

– la figure 7 est une vue en élévation plane latérale de la machine selon le type de réalisation précédent avec un équipage mobile de propulsion.

– la figure 8 est une vue en élévation latérale de l'élément de préhension et de son support et

– la figure 9 est une vue de dessus de ces mêmes éléments.

En se référant aux dessins on voit que la machine objet de la présente invention est destinée à assurer la récolte de fruits est montée sur un tracteur T1, cette machine étant conçue de façon à faire tomber les fruits d'un arbre et à les récolter tout en se déplaçant selon une trajectoire qui est parallèle à la rangée d'arbres.

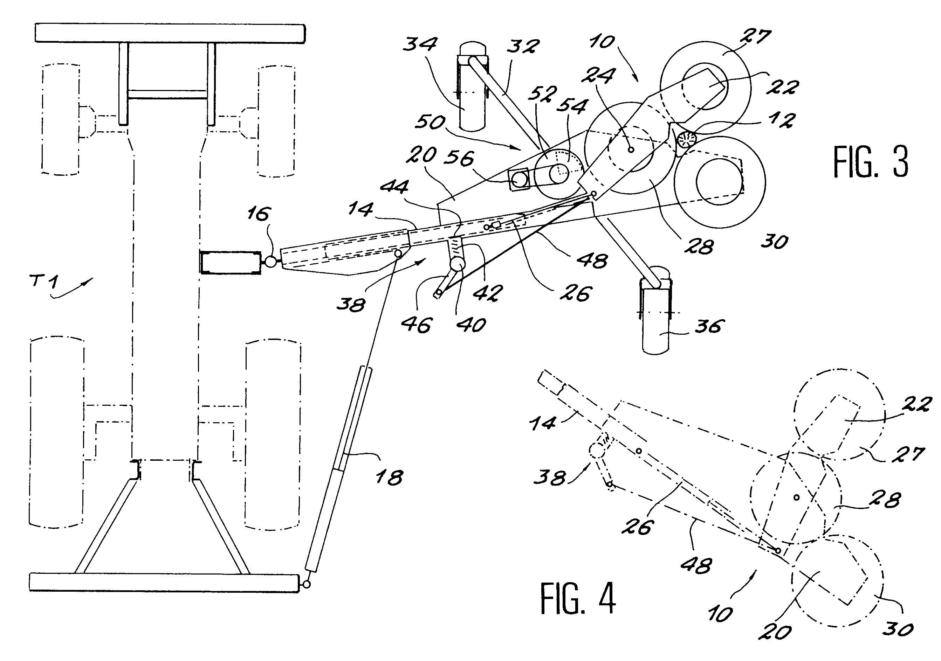

Cette machine comporte un élément de préhension désigné dans son ensemble par la référence 10 qui présente la forme générale d'une pince destinée à enserrer le tronc 12 de l'arbre dont on veut récolter les fruits. Cet élément de préhension 10 est monté à l'extrémité d'un bras télescopique 14 dont l'autre extrémité est fixée au chassis du tracteur T1 par l'intermédiaire d'une articulation 16. Le bras télescopique 14 est manoeuvré à partir d'un vérin 18 dont le cylindre est articulé sur le chassis du tracteur T1 comme on le voit clairement sur la figure 3. Dans la description qui suit ce vérin 18 sera appelé vérin de balayage.

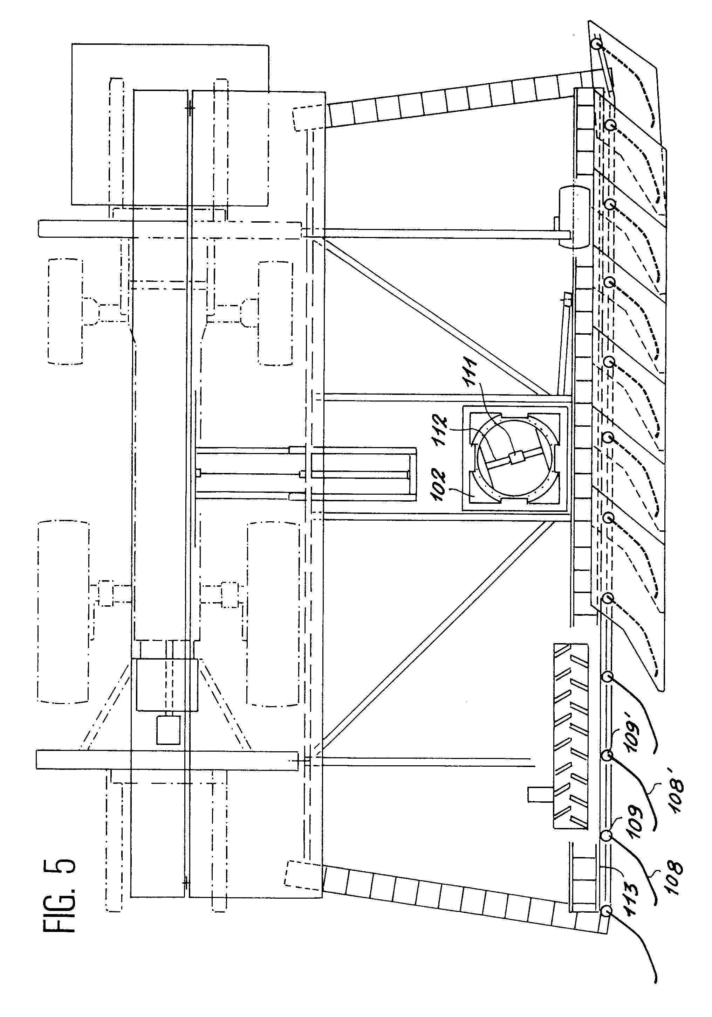

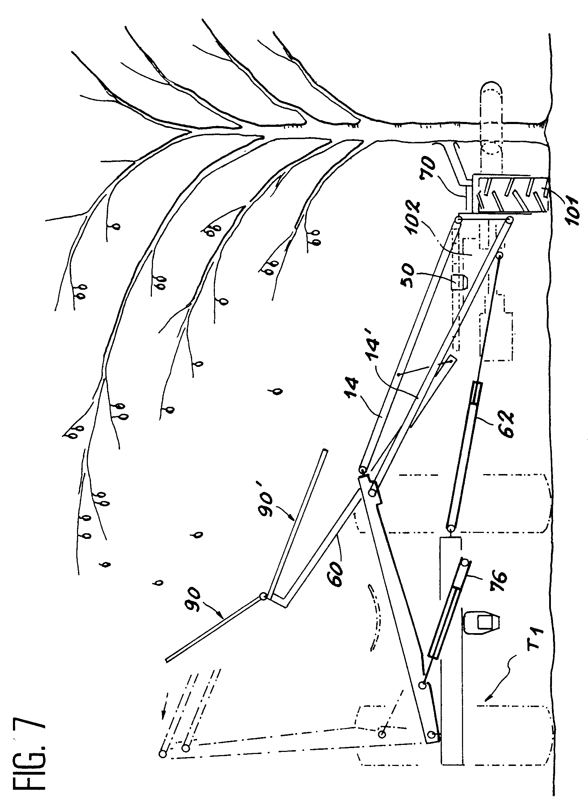

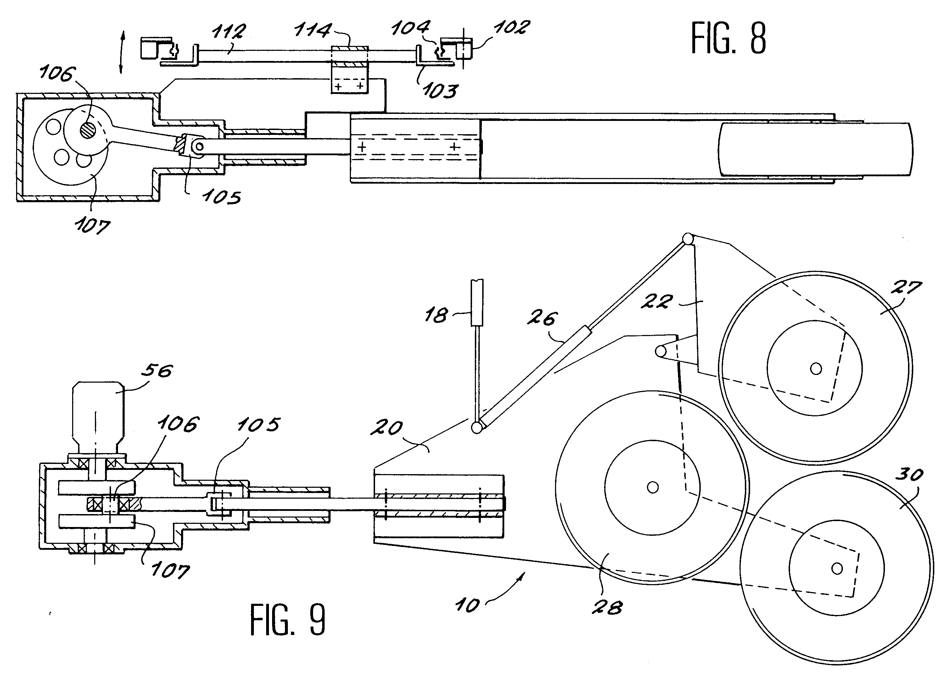

Selon un exemple de réalisation préféré (se reporter aux figures 5, 7, 8 et 9), l'élément de préhension 10 est monté sur un support 102 en forme de tourelle, celle-ci est guidée en rotation par l'intermédiaire d'un roulement 104, le tout, sensiblement horizontal, est pendu par une douille 111 à un axe 112 assurant ainsi le balayage angulaire et le déplacement axial dudit élément de préhension, cedit support est fixé par des moyens connus à un ensemble de bras télescopiques 14, 14', 18 qui prennent appui sur l'un des côtés au châssis du tracteur, et sur l'autre, à un bâti disposant de roues 100 ou de chenilles 101. Ces dernières sont éventuellement motrices, la force de traction étant fournie par un groupe hydraulique accouplé à l'une des prises de force du tracteur.

Le bras télescopique 14 porte l'élément de préhension 10 qui est constitué d'un bras fixe 20 monté à l'extrémité mobile du bras télescopique 14 et sur lequel est articulé un bras mobile 22. Ce bras mobile 22 est déplacé autour de son axe d'articulation 24 par l'intermédiaire d'un vérin de commande 26. L'examen de la figure 3 montre clairement la façon selon laquelle la manoeuvre du vérin 26 permet d'écarter ou de rapprocher l'élément mobile 22 de l'élément fixe 20 afin de venir enserrer le tronc 12 de l'arbre dont on veut récolter les fruits. Sur la figure 3, l'élément de préhension 10 est représenté dans la position dans laquelle il enserre le tronc 12 et sur la figure 4 cet élément 10 est représenté dans la position dans laquelle la pince constituée des bras 20 et 22 est ouverte. Afin de ne pas endommager le tronc de l'arbre, l'invention prévoit des moyens de protection qui, dans cet exemple de réalisation non limitatif ont été réalisés sous la forme de roues pneumatiques à axes verticaux portées respectivement par le bras mobile 22 de la pince (roue 27) et par le bras fixe 20 (roue 28-30).

L'élément de préhension 10 est monté sur un support 32 porté par un équipage mobile.

Le bras télescopique 14 est muni d'un système de frein de blocage désigné dans son ensemble par la référence 38, ce frein de blocage étant conçu de façon à être automatiquement libéré lorsque l'élément de préhension 10 en forme de pince enserre le tronc 12 de l'arbre (figure 3). Dans cet exemple de réalisation ce système de frein de blocage 38 comporte un excentrique 40 prenant appui sur un ressort 42 dont l'extrémité en regard du bras télescopique 14 porte une surface de friction 44, cet excentrique 40 étant monté à l'extrémité d'une tige 46 qui est reliée par une tringle 48 au bras mobile 22 de l'élément de préhension 10. Ainsi lorsque le bras mobile 26 se referme contre le bras fixe 20 en enserrant le tronc 12, l'excentrique 40 sous l'action de la tringle 48 et de la tige 46, libère le ressort 42 qui se détend en relachant le frein 38 (figure 3). Lorsque la pince est ouverte (figure 4) la traction exercée sur la tige 48 par le bras 22 actionne le frein 38 qui bloque le bras télescopique 14.

Afin de faire tomber les fruits de l'arbre lorsque son tronc 12 est maintenu enserré dans la pince de l'élément de préhension 10, l'invention prévoit un système vibrant désigné dans son ensemble par la référence 50 et qui est monté sur le bras fixe 20 de l'élément de préhension 10 ainsi qu'on le voit clairement sur la figure 3. Dans cet exemple de réalisation cet élément vibrant est constitué par un disque 52 portant une masse excentrée 54 constituant un balourd, ce disque étant entraîné en rotation par l'intermédiaire d'un moteur par exemple une pompe hydraulique 56.

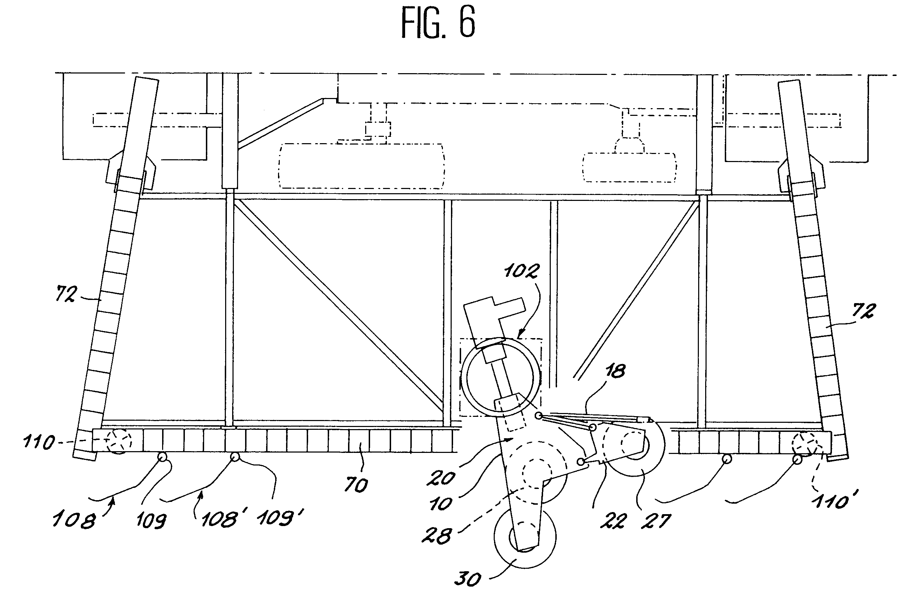

Selon un autre mode de réalisation du système vibrant (se référer aux figures 6, 8, 9), on préfère un système de type bielle-manivelle, la bielle 105 étant reliée au bras fixe 20 et mobile 22 configurant la pince, l'autre extrémité de ladite bielle est fixée sur manivelle 107 par l'intermédiaire d'axes 106, ces derniers possèdent des points d'ancrage radiaux différents afin de varier la course de la bielle et donc l'amplitude du secouement de l'élément de préhension. La manivelle 107 est animée d'un mouvement de rotation grâce par exemple à un groupe hydraulique. Dans cet exemple de réalisation particulier, il n'y a pas nécessité de freiner l'élément de préhension dans sa course, la technologie des vérins 18 de positionnement angulaire se charge de l'indexation correcte de l'élément de préhension.

La machine comporte également des moyens pour recueillir les fruits qui tombent de l'arbre lorsque le tronc de ce dernier est entraîné en rotation par le système vibrant 50.

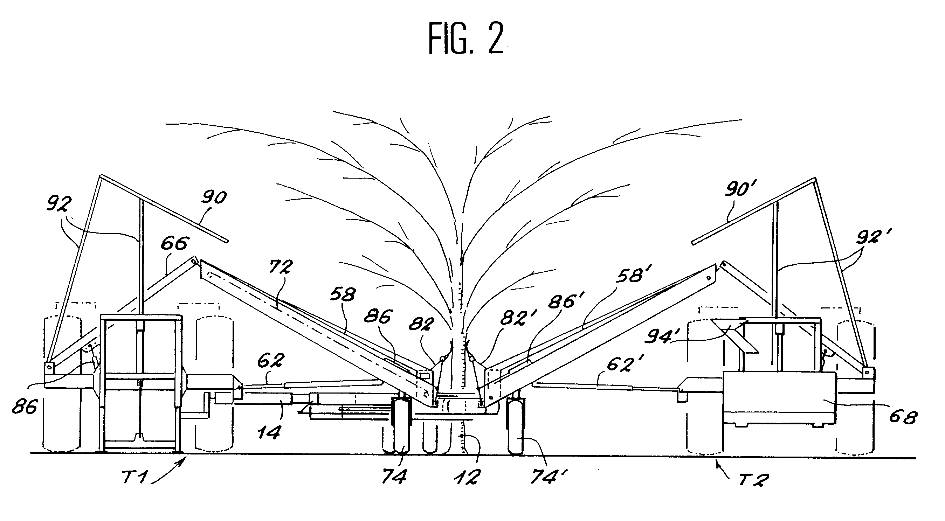

Dans cet exemple de réalisation non limitatif, ces moyens de recueil des fruits sont constitués par au moins un tapis de réception 58 porté par un cadre désigné dans son ensemble par la référence 60, ce cadre étant monté, à sa partie inférieure sur des bras télescopiques tels que 62 articulés sur le chassis du tracteur et, à sa partie supérieure sur des bras tels que 64 et 66. Comme on le voit sur les dessins le tapis de réception 58 vient se positionner sous l'arbre dont on veut recueillir les fruits. Selon la présente invention on prévoit un second tapis 58' similaire au tapis 58 qui est monté de la manière décrite ci-dessus sur un second tracteur T2, associé selon l'invention au tracteur T1 et qui se déplace parallèlement à la trajectoire du premier tracteur T1 de l'autre côté de la rangée d'arbres comme on le voit sur la figure 2.

Les tapis de réception tels que 58 et 58' sont associés à des tapis transporteurs permettant de recueillir les fruits et de les acheminer dans des palettes telles que 68 qui sont portées par les tracteurs T1 et T2. Dans cet exemple de réalisation chaque tapis de réception 58 ou 58′ comportent un tapis transporteur horizontal 70, prévu le long de son bord inférieur et qui peut être animé d'un déplacement de translation alternative et deux tapis transporteurs latéraux 72, 72′ inclinés par rapport à l'horizontale de manière à assurer la remontée des fruits qui sont acheminés par le transporteur horizontal 70 et à les amener dans les palettes telles que 68.

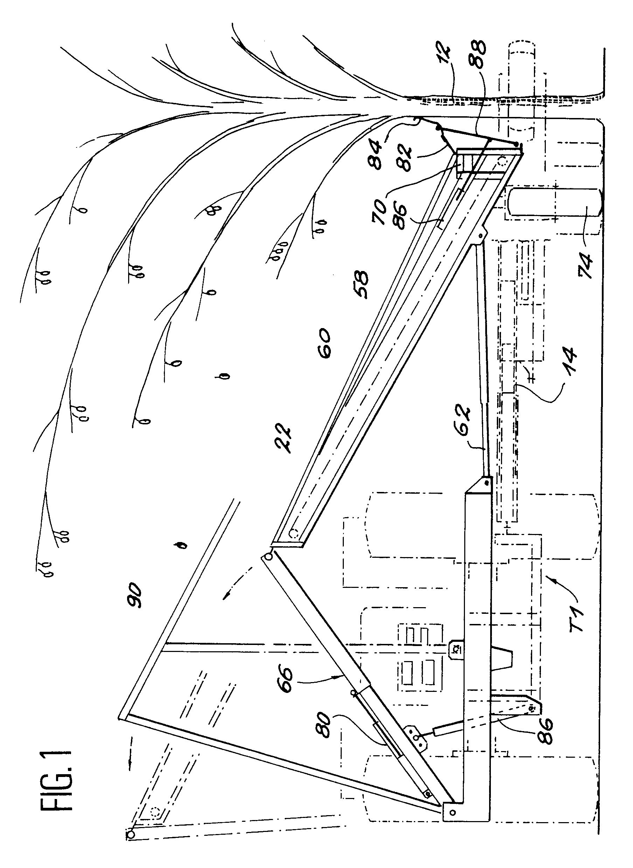

L'ensemble qui est constitué par les tapis de réception tels que 58 et les tapis transporteurs 72, 72′ est monté sur les roues folles 74, 74′. Cet ensemble peut être relevé à l'aide de vérins tels que 76 qui agissent sur les bras 64 et 66 à l'extrémité desquels est monté le cadre 60 supportant ledit ensemble. Sur la figure 1 on a représenté en traits mixtes la position relevée de cet ensemble.

Selon la présente invention, l'un des bras de support de l'ensemble décrit ci-dessus est monté télescopique. Dans cet exemple il s'agit du bras arrière 66 (figure 1) qui peut être déplacé à l'aide d'un vérin 80 appelé vérin de dévers. Il est ainsi possible de corriger la trajectoire de l'ensemble permettant de recueillir les fruits.

Afin d'assurer la continuité de la surface de réception, constituée par les tapis de réception tels que 58, 58′, entre les deux tracteurs T1 et T2, on prévoit un système de bâches d'étanchéité, monté sur les bords latéraux des tapis transporteurs tels que 70 et qui est conçu de manière à venir se rabattre contre le tronc 12 de l'arbre lorsque ce dernier est entraîné en vibration par le système vibrant 50.

Dans l'exemple de réalisation illustré par les figures 1 et 2 chaque bâche telle que 72 est montée par l'un de ses bords sur le bord latéral du cadre 60 portant le tapis transporteur 70 et son autre bord en forme de volet 74 est conçu de façon à venir s'appliquer contre la surface du tronc 12. Un vérin 76 permet d'assurer le relevage de chaque bâche 72 à l'aide d'une tige articulée 88.

Selon un autre mode de réalisation du dispositif d'étanchéité (cf. figure 5), on constitue préférentiellement un rideau à partir d'une pluralité de volets 108, 108′ possédant au moins un point d'articulation 109, 109′ sur le bord du châssis latéral du tracteur T1 ou T2, ces volets commandent par un système de tringlerie 113, connecté à l'unité de commande de la machine, le rapprochement ou l'écartement du dispositif d'étanchéité. Cet ensemble conforme ainsi un matelas d'écailles qui s'adapte parfaitement à l'espace à combler situé entre l'arbre et ledit tracteur T1 ou T2.

Afin d'éviter toute perte de fruits lors de la récolte chaque tracteur comporte en outre des surfaces fixes de réception 90, 90′ réalisées sous la forme de plans inclinés qui sont montés sur un support respectivement 92, 92′ fixé sur chacun des tracteurs T1, T2.

Le fonctionnement de la machine selon l'invention est le suivant pour le premier mode de réalisation (cf. figures 1, 2, 3 et 4) :

– les tracteurs T1 et T2 se déplacent de façon continue et selon des trajectoires parallèles entre les rangées d'arbres fruitiers. Lors de ces déplacements et avant préhension d'un tronc l'élément de préhension 10 est en position ouverte et le bras télescopique 14 est maintenu bloqué par le système de frein 38. Le vérin de balayage 18 permet de régler la position de l'élément de préhension 10 par rapport à la rangée d'arbres ;

– lorsque l'élément de préhension 10 vient s'appliquer sur le tronc 12 d'un arbre, les tracteurs continuant leur progression, la pince constituée par les bras 20 et 22 se referme sur le tronc 12 sous la commande du vérin 26 enserrant ainsi le tronc 12. Simultanément le frein 38 est débloqué par action de la tige de commande 48 sur le bras 46 et le bras télescopique 14 est libéré ce qui lui permet de suivre le déplacement relatif de l'arbre par rapport aux tracteurs, lorque ceux-ci poursuivent leur avance ;

– dès que le tronc 12 de l'arbre est enserré dans l'élément de préhension 10 le système vibrant 50 entre en action mettant l'arbre en vibration et faisant ainsi tomber les fruits. Ceux ci tombent alors sur la surface de réception consituée par les tapis de réception 58, 58′, les bâches 72, 72′ et les surfaces de réception complémentaire 90, 90′, prévus sur chaque tracteur T1 et T2 ;

– les fruits ainsi receuillis descendent le long des tapis de réception 58, 58′ pour être acheminés par les tapis transporteurs 70, 72 et 72′ dans les palettes telles que 68 prévues sur chaque tracteur T1 et T2. Selon l'invention, ce transfert dans les palettes 68 s'effectuent par l'intermédiaire de goulottes telles que 94′ qui sont pourvues de ventilateurs 110 de manière à éjecter les feuilles.

Pour le second mode de réalisation rencontré (cf. figures 5, 6, 7, 8 et 9), le fonctionnement reste globalement le même, néanmoins les différences de technologie évoquées ne nécessitent plus l'emploi d'un système de frein de l'élément de préhension, le dispositif d'étanchéité s'écarte ou se rapproche du tronc de l'arbre en fonction de l'écart rencontré par les volets et transmis par la tringlerie à l'unité de contrôle de la machine, ce qui ordonne aux vérins 72, 76 un mouvement d'avancée ou de recul.

La description faite ci-dessus de la machine selon l'invention montre que cette dernière fonctionne de façon totalement automatique alors que les tracteurs T1 et T2 se déplacent en continu.

Bien entendu les divers systèmes de vérins de commande décrits ci-dessus ainsi que les déplacements des tapis transporteurs et des équipages mobiles peuvent être commandés à partir d'une unité centrale par exemple hydraulique piloté par un boîtier électronique.

Il demeure bien entendu que la présente invention n'est pas limitée à l'exemple de réalisation décrit et représenté ici mais qu'elle en englobe toutes les variantes.

## Revendications

1 - Machine automatique destinée à assurer la récolte de fruits à partir d'arbres fruitiers, caractérisée en ce qu'elle comporte montés sur un tracteur en déplacement continu :

  – un élément de préhension (10), en forme de pince et positionné latéralement audit tracteur (T1), qui est monté sensiblement horizontalement sur un support (102) suspendu à un ensemble de bras télescopiques (14, 14'), pouvant être déplacé selon un mouvement angulaire par rapport à la trajectoire du tracteur, ledit élément de préhension comprenant un bras fixe (20) supporté à l'extrémité dudit bras télescopique et un bras mobile (22) articulé sur ledit bras fixe et déplacé par un vérin (26), lesdits bras fixe et mobile étant conçus de façon à enserrer le tronc (12) dudit arbre et ils sont pourvus de moyens de protection (27-28-30) afin de ne pas endommager le tronc de l'arbre qu'ils enserrent, tout cet ensemble étant supporté latéralement audit tracteur par un équipage mobile tel que des roues (100) ou des chenilles (101) éventuellement moteur.

  – un système vibrant (50) monté sur ledit élément de préhension (10) pour entraîner ledit arbre en vibration afin d'en faire tomber les fruits après préhension de son tronc par ledit élément de préhension ;

  – au moins un tapis de réception (58) des fruits tombant de l'arbre porté par un cadre (60) monté sur des bras télescopiques (62) et muni de moyens de support, ledit tapis vient se positionner sous ledit arbre pour recueillir les fruits .

2 - Machine selon la revendication 1, caractérisée en ce qu'elle comprend en outre :

  – des tapis transporteurs (70, 72, 72') qui réceptionnent les fruits à partir dudit tapis de réception (58) pour les acheminer vers des palettes (68) portées par ledit tracteur,

3 - Machine selon l'une des revendications 1 ou 2 caractérisée, en ce que les moyens de protection sont réalisés sous la forme de roues à pneumatique (27-28-30), à axes verticaux et pouvant tourner sur leurs bras respectifs (20-22)

4 - Machine selon l'une quelconque des revendications précédentes, caractérisée en ce que le tracteur (T1) est associé à un second tracteur (T2) se déplaçant selon la trajectoire parallèle à la trajectoire dudit premier tracteur, de l'autre côté de la rangée d'arbres, ce second tracteur étant muni d'un tapis de réception et de tapis transporteurs similaires à ceux (58-70-72-72') du premier tracteur.

5 - Machine selon l'une quelconque des revendications précédentes, caractérisée en ce que les bras télescopiques (14, 14') portant l'élément préhenseur en forme de pince (10) est déplacé d'un mouvement angulaire par l'intermédiaire d'un vérin de balayage (18) et il comporte au besoin un système de frein de blocage (38) qui se libère automatiquement lors du serrage de la pince sur le tronc de l'arbre.

6 - Machine selon la revendication 5, caractérisée en ce que ledit système de frein de blocage (38) est constitué d'un ressort dont une extrémité portant une surface de friction (44) vient s'appliquer contre ledit bras (14), l'autre extrémité dudit ressort étant en appui sur un excentrique (40) qui est commandé par un système bras (46) tige (48) manoeuvré par le bras mobile 22 de l'élément préhenseur en forme de pince (10).

7 - Machine selon l'une quelconque des revendications précédentes, caractérisée en ce que le système vibrant (50) est constitué par un disque (52) comportant une masse excentrée (54) formant balourd, ce disque étant entraîné en rotation par un moteur (56), notamment un moteur hydraulique, monté sur ledit bras fixe (20).

8 - Machine selon la revendication 5, caractérisée en ce que le système vibrant (50) est constitué par un ensemble bielle-manivelle, ladite bielle (105) pouvant avoir plusieurs points de fixation (106) radiale sur ladite manivelle (107) afin de faire varier la course de ladite bielle (105).

9 - Machine selon l'une quelconque des revendications précédentes, caractérisée en ce que ledit support (102) dudit élément de préhension (10) est constitué par une tourelle (103) munie d'un roulement (104) et est pendu par une douille (111) à un axe (112) qui assure le balayage angulaire et le déplacement axial dudit élément de préhension lors de la prise d'un tronc d'arbre.

10 - Machine selon l'une quelconque des revendications précédentes, caractérisée en ce que l' on prévoit un tapis transporteur horizontal à double sens de déplacement (70) disposé sur le bord inférieur du tapis de réception (58) et deux tapis transporteurs latéraux (72-72') inclinés sur l'horizontale remontant les fruits récoltés sur les tapis de réception (58-58') et transportés par le tapis horizontal, vers les palettes de réception prévues sur chacun desdits tracteurs.

11 - Machine selon l'une quelconque des revendications précédentes, caractérisée en ce que l'on prévoit sur chaque tracteur (T1-T2) un dispositif d'étanchéité monté sur l'un des bords latéraux du tapis transporteur et constitué par une pluralité de volets ou d'écailles (108,108') articulés autour d'axes (109,109') situés à l'une des extrémités desdits volets et sur le châssis constituant le flanc latéral du tracteur, ces volets pilotent, par l'intermédiaire d'une tringlerie (113) reliée à une unité de contrôle de la machine, des vérins (72, 76) qui assurent le rapprochement ou l'écartement du dispositif d'étanchéité entre ladite machine et le tronc d'arbre.

**12** - Machine selon l'une quelconque des revendications précédentes, caractérisée en ce que l'on prévoit en outre sur chaque tracteur (T1-T2) une bâche d'étanchéité (82-82′) montée sur l'un des bords latéraux du tapis transporteur horizontal, ces bâches sont déplacées à l'aide d'un système de vérin (86-86′) de manière à venir s'appliquer contre le tronc lorsque ce dernier est enserré par l'élément de préhension pour assurer la continuité de la surface de réception des fruits entre les tracteurs.

**13** - Machine selon l'une quelconque des revendications précédentes, caractérisée en ce que l'ensemble constitué par le ou les tapis de réception (58) et les tapis transporteurs (70-72-72′) de chaque tracteur (T1-T2) est monté sur des bras de relevage avant et arrière (64-66) mus par des vérins (76), le bras de relevage arrière (66) étant télescopique et commandé par un vérin de dévers (80).

FIG.1

FIG. 2

FIG. 3

FIG. 4

FIG. 5

FIG. 6

EP 0 507 640 A1

FIG. 7

EP 0 507 640 A1

FIG. 8

FIG. 9

Office européen
des brevets

**RAPPORT DE RECHERCHE EUROPEENNE**

Numero de la demande

EP    92 40 0216

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | US-A-3 248 865 (GERRANS)<br>* colonne 3, ligne 5 - colonne 4, ligne 19 *<br>* colonne 6, ligne 25 - ligne 55 *<br>* colonne 11, ligne 25 - ligne 73; figures 1-10 * | 1-2 | A01D46/26 |
| A | EP-A-0 010 203 (THE UNITED STATES OF AMERICA, U.S. DEPARTMENT OF COMMERCE)<br>* page 4, ligne 35 - page 5, ligne 19; figures * | 1 | |
| A | US-A-3 896 612 (MCHUGH ET AL.)<br>* colonne 1, ligne 5 - ligne 61; figures *<br>* colonne 3, ligne 48 - colonne 4, ligne 5 *<br>* colonne 7, ligne 51 - colonne 8, ligne 53; figures 1-7,14-19 * | 1-2 | |
| A | US-A-4 986 065 (COMPTON)<br>* colonne 4, ligne 24 - colonne 5, ligne 48 *<br>* colonne 15, ligne 54 - colonne 16, ligne 7; figure 13 * | 1-2,4 | |
| | | | **DOMAINES TECHNIQUES RECHERCHES (Int. Cl.5)**<br><br>A01D |

Le présent rapport a été établi pour toutes les revendications

| Lieu de la recherche | Date d'achèvement de la recherche | Examinateur |
|---|---|---|
| LA HAYE | 13 JUILLET 1992 | FONTS CAVESTANY A. |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
...............................................................................
& : membre de la même famille, document correspondant

EPO FORM 1503 03.82 (P0402)